# EUROPÄISCHE PATENTSCHRIFT

(11) **EP 0 289 981 B1**
(45) Veröffentlichungstag und Bekanntmachung des Hinweises auf die Patenterteilung: **05.01.1994**
(21) Anmeldenummer: 88107034.6
(22) Anmeldetag: 02.05.1988
(51) Int. Cl.: H02G 15/18, H02G 15/113, H02G 15/013

(54) **Kabelmuffe aus Kunststoff mit elastischen Dichtungselementen in den Abdichtungsbereichen**
Cable sleeve made of plastics material with resilient sealing elements in the sealing areas
Manchon de câble en matière plastique à éléments élastiques d'étanchéité dans les domaines d'étanchéité

(30) Priorität: 05.05.1987 DE 3714925; 18.08.1987 DE 3727557
(43) Veröffentlichungstag der Anmeldung: 09.11.1988
(73) Patentinhaber: SIEMENS AKTIENGESELLSCHAFT, 80333 München (DE)
(72) Erfinder: Pichler, Klaus, Ing. (grad), D-8156 Otterfing (DE); Bachel, Ernst, Ing. (grad), D-8085 Geltendorf (DE)

(56) Entgegenhaltungen:
- EP-A- 0 219 071
- DE-A- 3 512 165
- GB-A- 2 181 000
- US-A- 2 771 502

## Beschreibung

Die Erfindung betrifft eine Kabelmuffe mit stirnseitigen Dichtungskörpern und einem längsgeteilten Muffenkörper, wobei letzterer über elastische, endlose Ringdichtungen auf die Dichtungskörper aufgebracht ist und bei der im längsseitigen Verschlußbereich eine elastische Längsdichtung eingesetzt ist, wobei die endlosen Ringdichtungen in umlaufenden Nuten der stirnseitigen Dichtungskörper und die Längsdichtung in einer Längsnut eingelegt sind und daß in den Kreuzungsbereichen der Ring- und Längsdichtungen in der inneren Nutwand des Längsrandes der Längsnut jeweils eine Aussparung eingebracht ist, durch welche die Längsdichtung mit einem gegen die Ringdichtung gerichteten Überstand hindurchragt.

Aus der DE-OS 35 36 599 sind Kabelmuffen der obengenannten Art bekannt, bei denen Dichtungssysteme aus Ringdichtungen in den stirnseitigen Dichtungskörpern und Längsdichtungen in der Trennungslinie des geschlitzten Muffenrohres verwendet werden. Solche voneinander getrennte Dichtungen bereiten in den Kreuzungspunkten erhebliche Schwierigkeiten, die nicht immer optimal zu lösen sind, so daß dort immer Dichtungsprobleme auftreten. Ähnliche Verhältnisse treten auch bei Kabelmuffen aus Halbschalen auf.

Aus der DE-A-35 12 165 ist eine Kabelmuffe mit stirnseitigen Dichtungskörpern bekannt, bei denen Ringdichtungen in umlaufenden Nuten eingelegt sind. Außerdem wird eine Längsdichtung verwendet, welche durch Ausübung von Kräften durch das Verschlußsystem nach innen durch ein Fenster bewegt wird, das zwischen sich gegenüberliegenden Innenwänden von Deckeln gebildet ist. Hier wird also durch die Verformung der Längsdichtung versucht, eine Abdichtung zu den Ringdichtungen zu erreichen, wobei die Längsdichtungen in den kritischen Punkten mehr belastet werden.

So ist nun Aufgabe der vorliegenden Erfindung, die Kreuzungsbereiche von getrennt geführten Dichtungen zu optimieren. Die gestellte Aufgabe wird nun mit einer Kabelmuffe der oben beschriebenen Art dadurch gelöst, daß zumindest die als Längsdichtung ausgebildeten Dichtungselemente aus geschäumtem, Siliconkautschuk bestehen, wie zum Beispiel ein hochpolymeres, vernetztes Polysiloxan mit eventuell eingebauten anorganischen Füllstoffen ist, bei dem vorwiegend eine geschlossenzellige Porenstruktur vorliegt, daß das Kunststoffmaterial für die Dichtungselemente, vorzugsweise der Längsdichtung, eine Shore-Härte von 15 bis 40 aufweist, und daß die Längsdichtung jeweils in den Kreuzungsbereichen der Ring- und Längsdichtungen einen Ansatz aufweist, der der Aussparung in der Form entspricht, jedoch nach innen übersteht.

Um die Vorteile der Erfindung herausstellen zu können, werden zunächst die Schwierigkeiten bei bisherigen Dichtungssystemen erläutert. Bei den Kabeleinführungen, wie auch bei den Teilungsebenen der stirnseitigen Dichtungskörper wird die Dichtung üblicherweise mit einer plastischen Dichtungsmasse hergestellt, da sich in diesen Bereichen keine größeren Probleme ergeben.Anders sieht es jedoch in den Trennungsfugen zwischen den Dichtungskörpern und dem Muffenrohr, sowie im Längsbereich des Trennungsschlitzes aus, da hier außerdem noch die Verwendung von elastischem Dichtungsmaterial wegen der Forderung nach mehrmaligem Öffnen erwünscht ist. Die großen Problemstellen eines solchen Dichtungssystems sind nun die Kreuzungsstellen von Rund- und Längsdichtungen, insbesondere wegen der Bewegungen an diesen Stellen. Bei Temperaturänderungen, die laut Vorschrift zwischen - 40° C und + 60° C bei 1 bar Überdruck liegen können, ändert sich die Länge des Muffenrohres beispielsweise um 9 bis 18 mm je nach Muffenrohrlänge, während dabei die Runddichtungen in ihrer Lage konstant bleiben. So werden nun zur Lösung dieses Problems zusätzlich zu den elastischen Dichtungselementen plastische Dichtungsmassen zumindest in den Kreuzungsstellen verwendet. Vorteil dieser Dichtungsmassen ist wohl die Anpassungsfähigkeit an Unebenheiten, die zum Beispiel bei den beschriebenen Bewegungen auftreten können. Voraussetzung ist dabei, daß die Dichtungsmasse auf den Werkstoffen fest haftet und daß sie nicht durch den Innendruck der Kabelmuffe hinweggedrückt wird. Diese Forderungen widersprechen sich jedoch und es ist schwierig einen brauchbaren Kompromiß zu finden. Bei anderen Lösungen wird versucht, die Dichtigkeit durch direkten Kontakt der Rund- und Längsdichtungselemente zu erreichen. Dabei ergeben sich jedoch Zwickelbereiche, die wiederum zu Undichtigkeiten führen können. Volldichtungen sind dabei nicht geeignet, da zur Vermeidung der Zwickelbereiche die Dichtungselemente durch Verformung ausweichen müssen. In den Dichtungsnuten kann hierfür jedoch kein definierter Ausweichraum vorgesehen werden, da die Verhältnisse je nach Belastung jeweils anders sind. So bleibt nur ein Hohldichtungselement; doch entstehen dann hier beim Verpressen undefinierte Knautschzonen der eingespannten Hohldichtung, so daß sich auch hier wiederum Dichtungsprobleme einstellen.

Mit den erfindungsgemäßen Dichtungselementen und Ausbildungen in den Kreuzungsstellen lassen sich jedoch diese geschilderten Probleme überwinden. So wird hier der direkte Kontakt zwischen den Runddichtungen und der Längsdichtung gewählt, wobei die Längsdichtung und die Bereiche des Muffenrohres an den Kreuzungsstellen so ausgebildet sind, daß dieser direkte Kontakt zu den Runddichtungen hergestellt werden kann. Weiterhin ist das Dichtungsmaterial dieser Längsdichtung von solcher elastischer Eigenschaft, daß sie sich an die Runddichtungen anformen läßt, damit keine Zwickelbereiche entstehen. Die Verwendung von geschäumtem Kunststoff, insbesondere für die Längsdichtungen, begünstigt diese Eigenschaften, wobei es sich hier vorzugsweise um ein geschlossenporiges Material handelt. Ein solches Material hat folgende Eigenschaften:
- Beim Verpressen mit Ausweichmöglichkeit ergibt sich das gleiche Verhalten wie bei Vollmaterial
- beim Verpressen in einer geschlossenen Kammer wird das Volumen der Luftblasen verkleinert, wobei der Druck steigt. Es ergibt sich also die Preßkraft als Summe der Luftdruckerhöhung der Blasen und der elastischen Verformung wie im ersten Fall.

Hieraus ergibt sich nun für die Längsdichtung ein sehr günstiges Verhalten. Während des Schließens des Muffenrohres wird die Längsdichtung in die Nut gedrückt und diese legt sich zunächst an alle Seiten an und beim weiteren Schließvorgang werden, da keine Ausweichvolumen mehr vorhanden sind, die Blasen verkleinert. An den Kreuzungsstellen mit den Runddichtungen wird die Längsdichtung durch die stärkere Runddichtung in die Nut gedrückt. An diesen Stellen wird der Innendruck in den Blasen der Längsdichtung weniger erhöht, weil sie zum Teil neben den Runddichtungen ausweichen kann.

Durch den Innendruck der Kabelmuffe wird die Längsdichtung im Bereich der Kreuzungsstellen in die Nut gedrückt und verdichtet bis die elastische Kraft gleich der pneumatischen Kraft ist. Das Schaummaterial der Längsdichtung muß also genügend hart sein, um dem geforderten Druck widerstehen zu können. Hierfür eignen sich beispielsweise elastische Silikonschäume mit einer Shore-Härte von etwa 15 bis 40, die etwa eine 25 %ige Verpressung pro 1 bar Differenzdruck aufweisen. Die Runddichtung muß die Längsdichtung in die Nut pressen, sie muß also stärker sein. Der runde Querschnitt der Runddichtung ist dabei sehr geeignet, weil die Flächenberührung relativ klein ist und daher relativ hoher Flächendruck entsteht. Eine gängige Runddichtung aus Silikonschlauch bringt bei 3 mm Verpressung und 11 N/laufenden Zentimeter ungefähr 6 bar Flächendruck, der sich durch den Innendruck der Muffe vergrößert. Beim Schließen der Längsdichtung ergibt sich die Preßkraft, wie oben erwähnt, als Summe der Gummikraft und der Druckerhöhung in den Blasen. Bei den vorgesehenen Längsdichtungen für die erfindungsgemäß ausgebildeten Kabelmuffen ergibt sich somit eine Schließkraft von 30 N/laufender Zentimeter.

Nach längerer Zeit stellt sich in den Blasen der Längsdichtung ein Druckgefälle vom Muffeninnenraum nach außen hin ein, das die Dichtung entlastet. Weiterhin ist für die Abdichtung besonders günstig, daß sich das geschäumte Kunststoffmaterial besonders gut an scharfe Kanten und Ecken anschmiegen läßt, so daß Kippbewegungen und eventuell versetzte Schließkanten ebenfalls gut abgedichtet werden können.

Das Kunststoffmaterial für die erfindungsgemäßen Dichtungselemente ist vorzugsweise ein durch Verwendung von Treibmitteln hergestelltes, hochpolymeres, vernetztes Polysiloxan, eventuell mit eingebauten anorganischen Füllstoffen. Es ist weiterhin gekennzeichnet durch eine vorwiegend geschlossenzellige Porenstruktur und kann sowohl mit einer glatten Außenhaut wie auch als Schnittmaterial mit dann entsprechender Strukturierung verwendet werden. Das Kunststoffmaterial besitzt hervorragende Hitze- und Kältebeständigkeit und behält seine elastischen Eigenschaften bis etwa - 60° C bei.

Die Erfindung wird nun anhand von acht Figuren näher erläutert.
- Figur 1: zeigt den prinzipiellen Aufbau einer erfindungsgemäßen Kabelmuffe.
- Figur 2: zeigt einen Kreuzungsbereich von Grund- und Längsdichtung.
- Figur 3: zeigt die in Figur 2 angedeutete Ansicht.
- Figur 4: zeigt ein weiteres Ausführungsbeispiel für die Ausbildung im Kreuzungsbereich.
- Figur 5: zeigt eine Längsdichtung mit angeformtem Ansatz.
- Figur 6: zeigt die Längsdichtung mit einem separaten Ansatz.
- Figur 7: zeigt eine Längsdichtung mit rundem Querschnitt und einem entsprechend angepaßten Ansatz.
- Figur 8: zeigt ein Ausführungsbeispiel mit einem Muffenkörper aus Halbschalen.

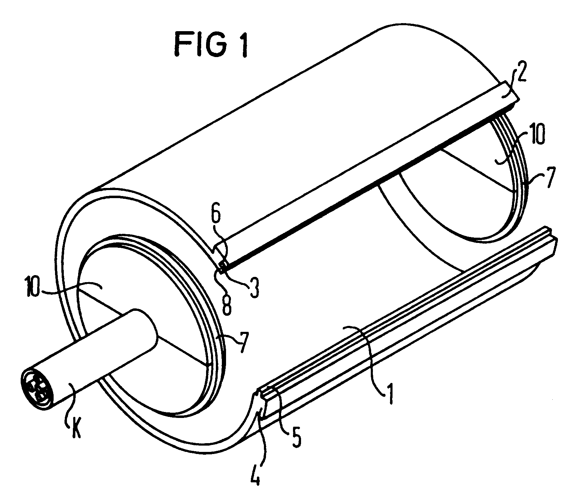

Die Figur 1 zeigt die Kabelmuffe gemäß der Erfindung im Prinzip, wobei angedeutet ist, daß hier als Muffenkörper ein einfach längsgeschlitztes Muffenrohr 1 auf die beiden stirnseitigen Dichtungskörper 10 aufgezogen wird. Jeder der beiden Dichtungskörper 10 besitzt eine umlaufende Dichtungsnut, in welche eine endlose Ringdichtung 7 der oben beschriebenen Art eingefügt ist. Weiterhin ist angedeutet, daß die Dichtungskörper 10 beispielsweise geteilt sind und daß in der Teilungsebene Kabeleinführungsöffnungen für die Einführung von Kabeln K eingebracht werden können. Das Muffenrohr 1 besitzt entlang seiner Längsränder 2 und 4 ein Dichtungssystem, das aus einer Längsnut 3 entlang des einen Längsrandes 2 und aus einer dazu passenden Dichtungsfeder 5 entlang des zweiten Längsrandes 4 besteht. In der Längsnut 3 wird gemäß der Erfindung die Längsdichtung 6 eingefügt, wie nachstehend näher erläutert wird. Über die abstehenden, hinterschnittenen Längsränder 2 und 4 werden hier nicht gezeigte Verschlußelemente, zum Beispiel eine Schließschiene, aufgezogen, mit denen der nötige Schließdruck in den Dichtungsbereichen erzeugt wird. Die Längsränder 2 und 4 wie die dazugehörige Schließschiene sind vorzugsweise keilförmig ausgebildet, wodurch der Schließvorgang wesentlich erleichtert wird.

Gleiche Verhältnisse ergeben sich bei mehrfach geteilten Muffenkörpern, wie zum Beispiel bei Halbschalen.

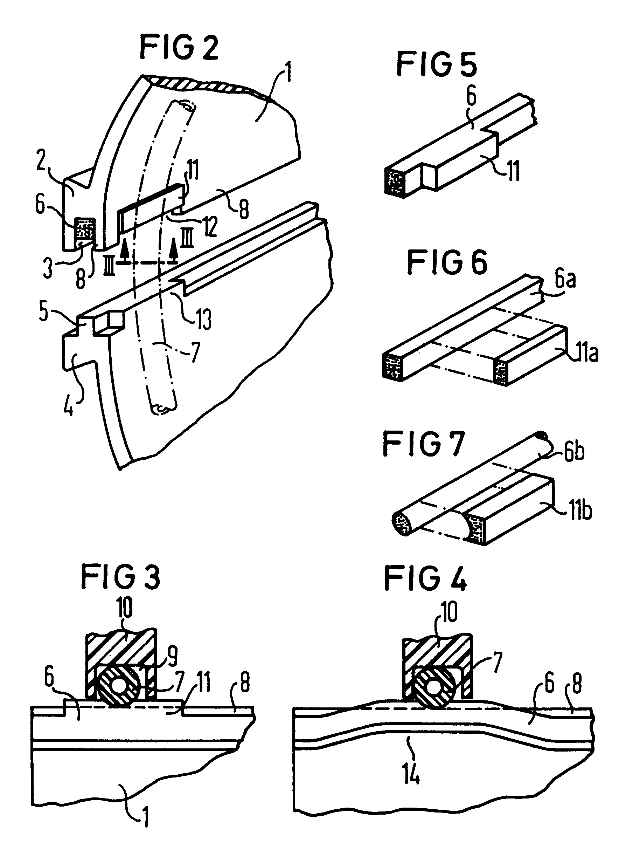

Die Figur 2 zeigt nun den Kreuzungsbereich einer Ringdichtung 7, die hier gestrichelt gezeichnet ist, und der Längsdichtung 6 entlang der Längsränder 2 und 4 des Muffenrohres 1. Dabei ist gezeigt, daß die innere Nutwand 8 des Längsrandes 2 im Bereich der umlaufenden Ringdichtung 7 eine Aussparung 12 aufweist, durch welche ein Ansatz 11 der Längsdichtung 6 mit geringem Überstand hindurchragt und somit gegen die Ringdichtung 7 drückt. Im Gegensatz dazu besitzt die Dichtungsfeder 5 des zweiten Längsrandes 4 an dieser Stelle eine Erweiterung 13, welche in die Aussparung 12 des gegenüber liegenden Längsrandes 2 paßt und somit für den Ansatz 11 der Längsdichtung 6 als Gegenlager dient. Dadurch ist gewährleistet, daß im Kreuzungspunkt von Längs- und Ringdichtung (6, 7) ein direkter Kontakt der Dichtungselemente erfolgen kann, so daß im Zusammenhang mit den vorher beschriebenen Eigenschaften der Dichtungselemente die gewünschte sichere Abdichtung erreicht werden kann.

Die Figur 3 zeigt die in Figur 2 angedeutete Ansicht III-III und erläutert die Verhältnisse im gefährdeten Kreuzungspunkt. Daraus geht hervor, daß die als Schlauch ausgebildete Ringdichtung 7 in der umlaufenden Dichtungsnut 9 des Dichtungskörpers 10 eingelegt und daß sie in den elastischen Ansatz 11 der Längsdichtung 6 ohne Zwickelbildung dichtend eingedrückt ist, wobei - wie oben bereits erläutert - die Ringdichtung 7 härter ist als die Längsdichtung 6. Eine weitere Maßnahme zur Abdichtung in diesem Bereich ist, die Dichtungselemente zumindest in diesen Bereichen mit einer üblichen plastischen Dichtungspaste, vorzugsweise auf der Basis von synthetischem Kautschuk zu benetzen, wodurch die Dichtungswirkung noch unterstützt wird.

Die Figur 4 zeigt ein zweites Ausführungsbeispiel für die Ausbildung der Kreuzungsstellen von Längs- und Ringdichtung (6, 7). Hier wird die Dichtungsnut in einer Ausbiegung 14 so weit nach außen über den Nutrand 8 hinaus verlegt, bis die Längsdichtung 6 mit genügendem Überstand gegen die Ringdichtung 7 gerichtet ist. Die in diesem Bereich fehlende Nutwand 8 entspricht dabei der Aussparung 12 im vorhergehenden Ausführungsbeispiel. Ansonsten gleichen sich die Verhältnisse.

Die Figuren 5 bis 7 zeigen Ausführungsbeispiele von Längsdichtungen in den Bereichen der Kreuzungsstellen. Im Beispiel der Figur 5 ist eine Längsdichtung 6 mit viereckigem Querschnitt dargestellt, wobei der Ansatz 11 fest angeformt ist. Vorzugsweise ist eine solche Dichtung wie auch die dazugehörige Längsnut im Querschnitt leicht trapezförmig ausgebildet, so daß das Einlegen der Dichtung erleichtert wird.

Die Figur 6 zeigt eine Längsdichtung 6a mit viereckigem Querschnitt, wobei hier der Ansatz 11a als separates Teil nachträgglich eingesetzt wird. Dies hat den Vorteil, daß beliebige Längen von Längsdichtungen vom Stück abgeschnitten werden können. Der Ansatz 11a kann dann zum Beispiel durch Kleben an der Längsdichtung fixiert werden.

Die Figur 7 zeigt gegenüber dem Ausführungsbeispiel von Figur 6 nur den Unterschied, daß hier ein Rundprofil 6b mit einem darauf abgestimmten Ansatz 11b verwendet wird.

Bei dem Ausführungsbeispiel nach Figur 4 ist lediglich eine einfache Längsdichtung ohne irgendeinen Ansatz erforderlich.

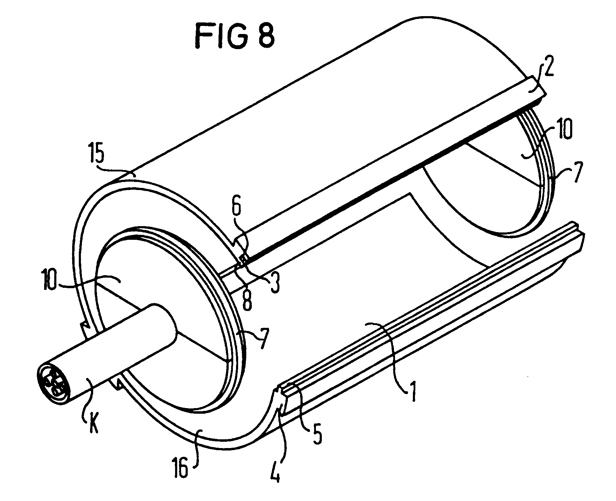

Die Figur 8 zeigt ergänzend eine Kabelmuffe, deren Muffenkörper aus zwei Halbschalen 15 und 16 gebildet ist. Gemäß der Erfindung werden auch an den Kreuzungspunkten der zweiten Trennungslinie die oben bereits beschriebenen Maßnahmen durchgeführt, so daß sich die gleichen Verhältnisse ergeben. Damit erübrigen sich weitere Erläuterungen.

Wie aus der vorangegangenen Beschreibung hervorgeht, ergeben sich in den Kreuzungsbereichen der Längs- und Ringdichtungen besondere Dichtungsschwierigkeiten, da sich durch die gegenseitige Verpressung an den Kanten der Dichtungselemente Verformungen einstellen, die zu Undichtigkeiten führen können. Aus diesem Grunde sind die Aussparungen und gegenüberliegenden Erweiterungen in den Kreuzungsbereichen der Längs- und Ringdichtung vorgesehen. Problematisch bleiben jedoch weiterhin die Dichtkanten im Stoßbereich der Dichtungselemente.

So ergibt sich für vorliegende Erfindung weiterhin die Aufgabe, die Dichtkanten in den Kreuzungsbereichen der Kabelmuffe im Zusammenspiel mit den Dichtungselementen so zu gestalten, daß die erforderliche Dichtung gewährleistet werden kann. Diese gestellte Aufgabe wird nun gemäß der Erfindung mit einer Kabelmuffe der eingangs beschriebenen Art dadurch gelöst, daß die zur Ringdichtung weisenden Dichtkanten entlang der Aussparung der Nutwand und entlang einer gegenüberliegenden Erweiterung der Dichtungsfeder Profilierungen aufweisen.

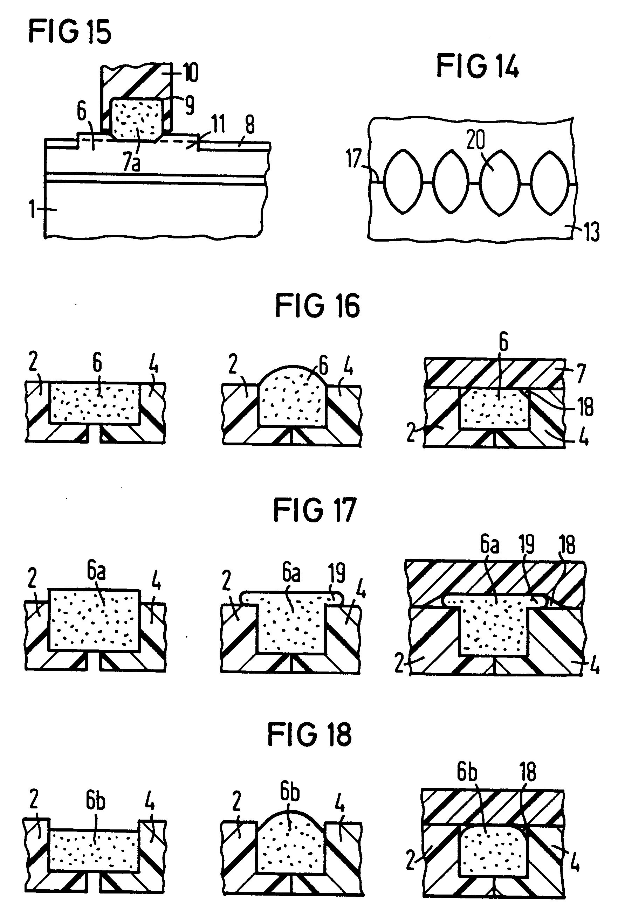

Der Vorteil an der Ausführungsform von Dichtungsbereichen in den Kreuzungsstellen von elastischen Dichtungselementen gemäß der Erfindung besteht nun darin, daß die eventuell auftretenden Leckstellen in den Zwickelbereichen zwischen den Dichtungselementen und den Muffenrohrkanten vermieden werden. Dies erfolgt mit Hilfe von Profilierungen an den entsprechenden Dichtungskanten, wie nachstehend näher erläutert wird. Diese Kreuzungsstellen sind bezüglich der Dichtigkeit besonders kritisch, wenn sich die einzelnen Dichtungselemente gegeneinander bewegen, wie dies zum Beispiel bei Temperaturänderungen erfolgen kann. Für die genauere Erläuterung dieser anstehenden Probleme sind in den Figuren 16, 17 und 18 die kritischen Verhältnisse schematisch dargestellt, wie sie derzeit der Stand der Technik zeigt.

So wird zwischen den beiden Längsrändern 2 und 4 einer Kabelmuffe ein Dichtungselement 6 in einer Längsnut eingelegt, wie der linke Teil der Figur 16 darlegt. Beim Zusammenpressen der beiden Längsränder 2 und 4, das heißt beim Schließen der Kabelmuffe wie der mittlere Teil der Figur 16 zeigt, wird das elastische Dichtungselement 6 so verformt, daß sich eine überstehende Kuppe ergibt. Wenn dieses seitlich bereits verpreßte Dichtungselement 6 nun zusätzlich durch ein zweites Dichtungselement 7, zum Beispiel eine Ringdichtung belastet wird, so wird das Dichtungselement 6 in die Längsnut eingepreßt, doch entstehen dabei Zwickelbereiche 18 entlang der beiden Längsränder 2 und 4 und der Längsdichtung, so daß hier Leckstellen in Längsrichtung entstehen. Eine derartige Wirkung ergibt sich dann, wenn das Dichtungselement 6 so stark ist, wie die Tiefe der Längsnut.

Die Figur 17 zeigt nun ein Dichtungselement 6a, das dicker ist als die Längsnut zwischen den beiden Längsrändern 2 und 4, so daß es bereits im offenen Zustand über den Rand der Dichtungsnut übersteht. Beim Verschließen der Kabelmuffe bilden sich dann wie im mittleren Teil der Figur 17 gezeigt ist entlang der Längsränder 2 und 4 ohrförmige Ausstülpungen 19 aus, an deren Enden sich wiederum längsgerichtete Zwickelbereiche 18 ausbilden, da der Übergangssprung der Ausstülpungen 19 von der Ringdichtung 7 nicht voll ausgefüllt werden kann. So sind also auch bei einem derartigen Ausführungsbeispiel Leckstellen in Längsrichtung zu erwarten.

Weiterhin wird in Figur 18 ein Beispiel gezeigt, bei dem ein Dichtungselement 6b in die Längsnut zwischen den beiden Längsrändern 2 und 4 eingelegt ist, das dünner ist als die Tiefe der Längsnut. Beim Schließen der Kabelmuffe erfolgt wiederum eine seitliche Verpressung des Dichtungselementes 6b, wie im mittleren Teil der Figur 18 wiedergegeben ist. Auch hier bilden sich durch Druck eines darüber liegenden zweiten Dichtungselementes 7 undichte Zwickelbereiche 18 aus.

Daraus läßt sich erkennen, daß das Dichtungsproblem in den Kreuzungsstellen zweier Dichtungen nicht einfach durch eine geeignete Dimension der Dichtungselemente gelöst werden kann, zumal bei den Dichtungselementen wie auch den dazu gehörenden Muffenteilen Maßtoleranzen zu überbrücken sind, die keine sichere Abdichtung ergeben würden, insbesondere dann, wenn noch die gegenseitigen Bewegungen zwischen den einzelnen Dichtungselementen berücksichtigt werden müssen. Durch die Ausbildung der Kreuzungsstellen von Dichtungselementen gemäß der Erfindung mit einer geeigneten Abstimmung der Dichtkanten ist jedoch das Dichtungsproblem auch in diesen kritischen Zwickelbereichen zu lösen.

Die Erfindung wird nun anhand der Figuren erläutert.

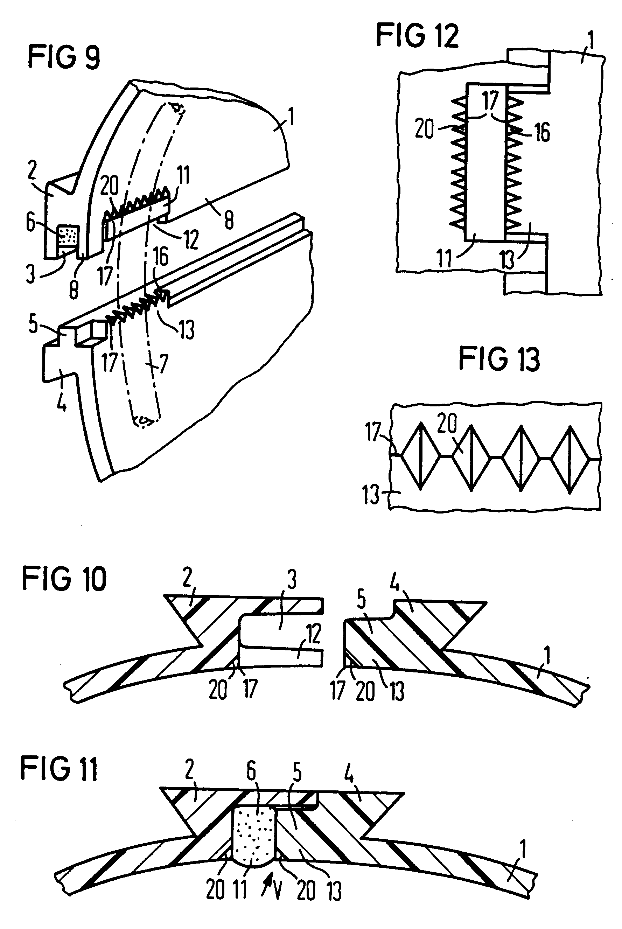

- Figur 9: zeigt eine Kreuzungsstelle von Dichtungselementen am Beispiel einer Kabelmuffe.
- Figur 10: zeigt den relevanten Bereich des Längsverschlusses im offenen Zustand.
- Figur 11: zeigt den relevanten Bereich des Längsverschlusses im geschlossenen Zustand.
- Figur 12: zeigt den relevanten Bereich des Längsverschlusses in einer Ansicht von innen.
- Figur 13: zeigt die Ansicht der Dichtkanten wie sie in Figur 11 angedeutet ist.
- Figur 14: zeigt eine Abwandlung der Profilierung der Dichtkante.
- Figur 15: zeigt ein Ausführungsbeispiel mit gleichartigen Dichtungselementen für die Längsdichtung und die Ringdichtung.
- Die Figuren 16, 17 und 18: erläutern den Stand der Technik, der oben bereits beschrieben wurde.

Die Figur 9 zeigt eine Kabelmuffe gemäß der Erfindung im Prinzip, wobei angedeutet ist, daß hier als Muffenkörper ein längsgeschlitztes Muffenrohr 1 auf die beiden stirnseitigen Dichtungskörper mit der Ringdichtung 7 aufgezogen wird. Jede der beiden an sich bekannten Dichtungskörper an den Stirnseiten der Kabelmuffe 1 besitzt eine umlaufende Dichtungsnut, in welche eine endlose Ringdichtung 7 eingefügt ist. Diese Ringdichtung 7 kann schlauchförmig ausgebildet sein oder auch aus geschäumtem Kunststoffmaterial wie die Längsdichtung 6 bestehen. Aus dieser Figur geht nun besonders der Kreuzungsbereich der Ringdichtung 7, die hier gestrichelt gezeichnet ist, und der Längsdichtung 6 entlang der Längsränder 2 und 4 des Muffenrohres 1 hervor. Dabei ist gezeigt, daß die innere Nutwand 8 des Längsrandes 2 im Bereich der umlaufenden Ringdichtung 7 eine Aussparung 12 aufweist, durch welche ein Ansatz 11 der Längsdichtung 6 mit geringem Überstand hindurchragt und somit gegen die Ringdichtung 7 drückt, wie in der vorhergehenden Beschreibung eingehend erläutert ist. Dort ist auch beschrieben, daß im Gegensatz zu dieser Aussparung 12 die Dichtungsfeder 5 des zweiten Längsrandes 4 eine Erweiterung 13 aufweist, welche in die Aussparung 12 des gegenüberliegenden Längsrandes 2 paßt und somit für den Ansatz 11 der Längsdichtung 6 als Gegenlager dient. Dadurch ist gewährleistet, daß im Kreuzungspunkt von Längs- und Ringdichtung ein direkter Kontakt der Dichtungselemente erfolgen kann. An den Dichtkanten 17 der Aussparung 12 wie auch der Erweiterung 13 treten nun im Zusammenhang mit dem Ansatz 11 der Längsdichtung 6 die oben beschriebenen Dichtungsprobleme bezüglich der Leckstellen in Längsrichtung auf. Gemäß der vorliegenden Erfindung werden diese Dichtkanten 17 entlang der Aussparung 12 wie auch der Erweiterung 13 mit geeigneten Profilierungen versehen, so daß sich für das elastische Dichtungselement Ausweichhohlräume ergeben. Auf diese Weise lassen sich nun die Toleranzfälle für Dichtungen, wie sie oben als Stand der Technik beschrieben sind, voll erfassen. Betrachtet man nun die Bedingungen wie sie in Figur 18 angedeutet sind im Zusammenhang mit der Profilierung 20 der Dichtkanten 17 so läßt sich zeigen, daß der Ansatz 11 der Längsdichtung 6 in die Profilierungen eindringt und sich an den Kanten der Profilierung hochzieht. Dadurch können sich keine längsgerichteten Zwickel ausbilden, so daß in Längsrichtung eine ausgezeichnete Dichtwirkung gegeben ist. Betrachtet man den Toleranzfall mit überstehender Dichtung nach Figur 17, so ist festzustellen, daß das überschüssige Volumen in die Profilierungen je nach Größe voll einwandert, so daß sich keine ohrenförmigen Ausstülpungen 19 bilden können. Auch der Toleranzfall nach Figur 16 ist damit erfaßt, da hier die Bedingungen nicht so scharf gegeben sind wie in dem schon vorher behandelten Toleranzfall nach Figur 10. Somit ist in allen Fällen eine sichere Abdichtung entlang der Dichtkanten 17 entlang der Aussparung 12 sowie der Erweiterung 13 gewährleistet. Weiterhin hat diese Profilierung den zusätzlichen Vorteil, daß die Dichtung in Längsrichtung gegen Verschieben gesichert ist, was sich besonders günstig auswirkt bei den vorher schon erwähnten Temperaturgängen.

Die Figur 10 zeigt einen Querschnitt durch die Längsränder 2 und 4 der Kabelmuffe 1 im Bereich der Kreuzungsstelle von Längs- und Ringdichtung. Hierbei ist deutlich die Längsnut 3, die hier nach einwärts durch die Aussparung 12 unterbrochen ist. Am Innenrand der Aussparung 12 befindet sich die kritische Dichtkante 17, bei der hier Einschnitte der Profilierung 20 angedeutet sind. Die gleichen Verhältnisse sind am Längsrand 4 gegeben, wo die Dichtungsfeder 5 im Bereich der Aussparung 12 mit der Erweiterung 13 versehen ist. Am Innenrand der Erweiterung 13 ist wiederum die kritische Dichtkante 17 mit der angedeuteten Profilierung 16 zu sehen. Diese Darstellung zeigt den noch geöffneten Zustand des Längsverschlusses.

Die Figur 11 zeigt nun die Verhältnisse des Längsverschlusses nach Figur 2 im geschlossenen Zustand mit eingelegter Längsdichtung 6. Hier ist erkennbar, daß durch die seitliche Verpressung der Längsdichtung 6 eine Überhöhung des Ansatzes 11 nach einwärts gegen die hier nicht gezeigte Ringdichtung erfolgt. Damit ergäben sich Verhältnisse, wie sie im geschilderten Stand der Technik geschildert sind, wenn nicht die erfindungsgemäßen Profilierungen 20 entlang der Dichtkanten angeordnet wären. Um dies deutlich herauszustellen, ist die Ringdichtung hier nicht gezeichnet. Ist die Ringdichtung jedoch vorhanden, wird das Volumen des Ansatzes 11 der Längsdichtung 6 in die Ausweichräume der Profilierung eingepreßt und bewirken die oben beschriebene und erwünschte Abdichtung. Weiterhin ist die Ansicht V für die folgende Figur 13 angedeutet.

Die Figur 12 zeigt nun eine Ansicht des Dichtungssystems im Bereich der Kreuzungsstelle der Längsdichtung 6 mit dem Ansatz 11 und der Ringdichtung 7. Deutlich erkennbar sind die entlang der Dichtkanten 17 angeordneten Profilierungen 20, durch die eine sichere Abdichtung in Längsrichtung gemäß der Erfindung erreicht wird.

Die Figur 13 zeigt nun die Ansicht auf eine Dichtkante 17 wie sie in Figur 3 durch V angedeutet ist. Bei dieser Form der Profilierung 20 sind kantige Einkerbungen gewählt, wobei vorzugsweise der Abstand von zwei Kerbkanten etwa 3 mm beträgt. Die Tiefe dieser Einkerbungen wird auf die Härte der verwendeten elastischen Dichtungen entsprechend abgestimmt, um optimale Verhältnisse zu erreichen. Weiterhin lassen sich durch die Ausbildung der Kanten, sowohl der Dichtkante 17, wie auch der Kanten der Profilierungen selbst, den verwendeten Materialien entsprechend anpassen, von scharfkantig bis zu abgerundet.

Die Figur 14 zeigt im Ausschnitt einen Teil einer Dichtkante 17, bei der die Profilierung 20a durch abgerundete Einschnitte hergestellt ist. Es lassen sich jedoch auch andere Profilierungsarten in die Dichtkanten 17 mit gleicher Wirkungsweise einarbeiten.

Die Figur 15 zeigt schließlich ein Ausführungsbeispiel gemäß der Erfindung, bei der in einer Draufsicht angedeutet ist, daß auch für die Ringdichtung 7a wie bei der Längsdichtung 6 ein geschäumtes Kunststoffmaterial verwendet werden kann. Diese Ringdichtung 7a ist in der umlaufenden Dichtungsnut 9 des Dichtungskörpers 10 eingelagert und ist dichtend gegen die Aussparung 11 der Längsdichtung 6 eingepreßt. Dabei sind die oben beschriebenen erfindungsgemäßen Anordnungen bezüglich der Dichtkanten mit den Profilierungen enthalten.

## Patentansprüche

1. Kabelmuffe mit stirnseitigen Dichtungskörpern (10) und einem zumindest längsgeteilten Muffenkörper, wobei letzterer über elastische endlose Ringdichtungen (7) auf die Dichtungskörper (10) aufgepreßt ist und bei der im längsseitigen Verschlußbereich eine elastische Längsdichtung (6) eingesetzt ist, wobei die endlosen Ringdichtungen (7) in umlaufenden Nuten (9) der stirnseitigen Dichtungskörper (10) und die Längsdichtung (6) in einer Längsnut (3) eingelegt sind und daß in den Kreuzungsbereichen der Ring- und Längsdichtungen in der inneren Nutwand (8) des Längsrandes (2) der Längsnut (3) jeweils eine Aussparung (12) eingebracht ist, durch welche die Längsdichtung (6) mit einem gegen die Ringdichtung (7) gerichteten Überstand hindurchragt,
**dadurch gekennzeichnet,**
daß zumindest die als Längsdichtung (6) ausgebildeten Dichtungselemente aus geschäumtem Siliconkautschuk bestehen, wie zum Beispiel ein hochpolymeres, vernetztes Polysiloxan mit eventuell eingebauten anorganischen Füllstoffen ist, bei dem vorwiegend eine geschlossenzellige Porenstruktur vorliegt, daß das Kunststoffmaterial für die Dichtungselemente (6, 7), vorzugsweise der Längsdichtung (6), eine Shore-Härte von 15 bis 40 aufweist, und daß die Längsdichtung (6) jeweils in den Kreuzungsbereichen der Ring- und Längsdichtungen (6, 7) einen Ansatz (11, 11a, 11b) aufweist, der der Aussparung (12) in der Form entspricht, jedoch nach innen übersteht.

2. Kabelmuffe nach Anspruch 1,
**dadurch gekennzeichnet,**
daß der Ansatz (11) fest angeordnet ist.

3. Kabelmuffe nach Anspruch 1,
**dadurch gekennzeichnet,**
daß der Ansatz durch ein separates Ansatzstück (11a, 11b) gebildet ist.

4. Kabelmuffe nach Anspruch 1,
**dadurch gekennzeichnet,**
daß der Nutgrund der Längsnut (3) jeweils in den Kreuzungsbereichen der Ring- und Längsdichtung (6, 7) eine nach auswärts gerichtete Ausbiegung (14) aufweist, die so groß ist, daß die eingebrachte Längsdichtung (6) durch die Aussparung (12) hindurch übersteht.

5. Kabelmuffe nach einem der vorhergehenden Ansprüche,
**dadurch gekennzeichnet,**
daß zumindest ein Dichtungselement (6, 7) kantiges, vorzugsweise trapezförmiges Profil aufweist.

6. Kabelmuffe nach einem der Ansprüche 1 bis 4,
**dadurch gekennzeichnet,**
daß zumindest ein Dichtungselement (6, 7) rundes Profil aufweist.

7. Kabelmuffe nach einem der vorhergehenden Ansprüche,
**dadurch gekennzeichnet,**
daß die Längsdichtung (6) die Längsnut (3) in der Tiefe nur so weit ausfüllt, daß die Nutwände (8) überstehen und somit Führungsränder für die Dichtungsfeder (5) entlang der Teilungslinie der Kabelmuffe gebildet sind.

8. Kabelmuffe nach einem der vorhergehenden Ansprüche,
**dadurch gekennzeichnet,**
daß die in die mit Längsdichtung (6) gefüllte Längsnut (3) eintauchende Dichtungsfeder (5) jeweils eine Erweiterung (13) in den Kreuzungsbereichen der Ring- und Längsdichtungen (6, 7) aufweist, die dem Ausschnitt der Aussparung (12) des ersten Längsrandes (2) entspricht.

9. Kabelmuffe nach einem der vorhergehenden Ansprüche,
**dadurch gekennzeichnet,**
daß die Breite der Ringnut (9) in den Dichtungskörpern (10) geringfügig größer ist als die entsprechende Ausdehnung der Ringdichtung (7).

10. Kabelmuffe nach einem der vorhergehenden Ansprüche,
**dadurch gekennzeichnet,**
daß die Oberflächen der Ring- und/oder Längsdichtung (6, 7) zumindest in den Kreuzungsbereichen mit einem plastischen, nicht aushärtenden Dichtungsmittel, vorzugsweise einer Paste auf der Basis von synthetischem Kautschuk, benetzt sind.

11. Kabelmuffe nach einem der vorhergehenden Ansprüche,
**dadurch gekennzeichnet,**
daß die Oberflächen der Dichtungselemente, vorzugsweise die Längsdichtung (6), aus Vollmaterial ausgeschnitten sind und deshalb durch die angeschnittenen Poren bedingt eine charakteristische Oberflächenstruktur aufweist.

12. Kabelmuffe nach einem der Ansprüche 1 bis 10,
**dadurch gekennzeichnet,**
daß die Oberflächen der Dichtungselemente (6, 7) glatt sind.

13. Kabelmuffe nach einem der vorhergehenden Ansprüche,
**dadurch gekennzeichnet,**
daß die Dichtungselemente der Ringdichtung (7) härter sind als die Dichtungselemente der Längsdichtung (6).

14. Kabelmuffe nach einem der vorhergehenden Ansprüche,
**dadurch gekennzeichnet,**
daß die Ringdichtungen (7) schlauchförmig ausgebildet sind.

15. Kabelmuffe nach einem der vorhergehenden Ansprüche,
**dadurch gekennzeichnet,**
daß die Ringdichtungen (7) aus nicht geschäumtem Kunststoffmaterial bestehen.

16. Kabelmuffe nach Anspruch 1,
**dadurch gekennzeichnet,**
daß die zur Ringdichtung (7) weisenden Dichtkanten (17) entlang der Aussparung (12) der Nutwand (8) und entlang einer gegenüberliegenden Erweiterung (13) der Dichtungsfeder (5) Profilierungen (20, 20a) aufweisen.

17. Kabelmuffe nach Anspruch 16,
**dadurch gekennzeichnet,**
daß die Kanten der Profilierung (20, 20a) der Dichtkante (17) scharfkantig ausgeformt sind.

18. Kabelmuffe nach Anspruch 16,
**dadurch gekennzeichnet,**
daß die Kanten der Profilierung (20, 20a) der Dichtkante (17) abgeschrägt, vorzugsweise abgerundet ausgeformt sind.

19. Kabelmuffe nach einem der Ansprüche 16 - 18,
**dadurch gekennzeichnet,**
daß die Profilierung der Dichtkante (17) durch dreieckige Kerbungen (20) gebildet ist.

20. Kabelmuffe nach einem der Ansprüche 16 bis 18,
**dadurch gekennzeichnet,**
daß die Profilierung der Dichtkante (17) durch Rundkerbungen (20a) gebildet ist.

21. Kabelmuffe nach einem der Ansprüche 16 bis 18,
**dadurch gekennzeichnet,**
daß die Ringdichtung (7) runden Querschnitt aufweist.

22. Kabelmuffe nach einem der Ansprüche 16 bis 18,
**dadurch gekennzeichnet,**
daß die Ringdichtung (7a) kantigen Querschnitt aufweist.

## Claims

1. Cable sleeve with end sealing bodies (10) and a sleeve body which is at least longitudinally split, the latter being pressed over elastic endless ring seals (7) onto the sealing bodies (10), and in the case of which an elastic longitudinal seal (6) is inserted in the closure region on the longitudinal side, the endless ring seals (7) being inserted in circumferential grooves (9) on the end sealing bodies (10) and the longitudinal seal (6) being inserted in a longitudinal groove (3), and in that in each case one recess (12) is incorporated in the crossing regions of the ring seals and longitudinal seals in the inner groove wall (8) of the longitudinal edge (2) of the longitudinal groove (3), through which recess (12) the longitudinal seal (6) projects with an overhang pointing towards the ring seal (7), characterized in that at least the sealing elements which are constructed as a longitudinal seal (6) are composed of foamed silicon rubber such as, for example, a highly polymerized, cross-linked polysiloxane with, possibly built-in, inorganic fillers, in the case of which a closed-cell pore structure is predominantly present, in that the plastic material for the sealing elements (6, 7), preferably of the longitudinal seal (6), has a Shore hardness of 15 to 40, and in that the longitudinal seal (6) has an attachment (11, 11a, 11b) in each case in the crossing regions of the ring and longitudinal seals (6, 7), which attachment corresponds in shape to the recess (12) but projects inwards.

2. Cable sleeve according to Claim 1, characterized in that the attachment (11) is arranged firmly.

3. Cable sleeve according to Claim 1, characterized in that the attachment is formed by a separate attachment piece (11a, 11b).

4. Cable sleeve according to Claim 1, characterized in that the groove base of the longitudinal groove (3) has an outwardly directed bend (14) in each case in the crossing regions of the ring and longitudinal seals (6, 7), which bend (14) is so large that the longitudinal seal (6) fitted into it projects through the recess (12).

5. Cable sleeve according to one of the preceding claims, characterized in that at least one sealing element (6, 7) has an angled, preferably trapezoidal profile.

6. Cable sleeve according to one of Claims 1 to 4, characterized in that at least one sealing element (6, 7) has a round profile.

7. Cable sleeve according to one of the preceding claims, characterized in that the longitudinal seal (6) fills the longitudinal groove (3) in depth only so far that the groove walls (8) project and guide edges for the sealing tongue (5) are thus formed along the line of the split in the cable sleeve.

8. Cable sleeve according to one of the preceding claims, characterized in that the sealing tongue (5) which enters into the longitudinal groove (3) which is filled with the longitudinal seal (6) in each case has an expansion (13) in the crossing regions of the ring and longitudinal seals (6, 7), which expansion (13) corresponds to the cut-out of the recess (12) of the first longitudinal edge (2).

9. Cable sleeve according to one of the preceding claims, characterized in that the width of the annular groove (9) in the sealing bodies (10) is slightly larger than the corresponding extent of the ring seal (7).

10. Cable sleeve according to one of the preceding claims, characterized in that the surfaces of the ring and/or longitudinal seal (6, 7) are wetted at least in the crossing regions with a plastic, non-curing sealing means, preferably a paste based on synthetic rubber.

11. Cable sleeve according to one of the preceding claims, characterized in that the surfaces of the sealing elements, preferably the longitudinal seal (6), are cut out from solid material and therefore have a characteristic surface structure which is governed by the cut pores.

12. Cable sleeve according to one of Claims 1 to 10, characterized in that the surfaces of the sealing elements (6, 7) are smooth.

13. Cable sleeve according to one of the preceding claims, characterized in that the sealing elements of the ring seal (7) are harder than the sealing elements of the longitudinal seal (6).

14. Cable sleeve according to one of the preceding claims, characterized in that the ring seals (7) are constructed in the form of hoses.

15. Cable sleeve according to one of the preceding claims, characterized in that the ring seals (7) composed of non-foamed plastic material.

16. Cable sleeve according to Claim 1, characterized in that the sealing edges (17) pointing towards the ring seal (7) along the recess (12) in the groove wall (8) and along an opposite expansion (13) of the sealing tongue (5) have profiles (20, 20a).

17. Cable sleeve according to Claim 16, characterized in that the edges of the profile (20, 20a) of the sealing edge (17) are formed out to have sharp edges.

18. Cable sleeve according to Claim 16, characterized in that the edges of the profile (20, 20a) of the sealing edge (17) are chamfered, preferably being formed out in a rounded manner.

19. Cable sleeve according to one of Claims 16 - 18, characterized in that the profile of the sealing edge (17) is formed by triangular notches (20).

20. Cable sleeve according to one of Claims 16 to 18, characterized in that the profile of the sealing edge (17) is formed by round notches (20a).

21. Cable sleeve according to one of Claims 16 to 18, characterized in that the ring seal (7) has a round cross-section.

22. Cable sleeve according to one of Claims 16 to 18, characterized in that the ring seal (7a) has an angled cross-section.

## Revendications

1. Manchon de câble, ayant des pièces frontales d'étanchéité (10) et au moins un corps de manchon fendu longitudinalement, ce dernier étant comprimé sur les pièces d'étanchéité (10) par des anneaux (7) élastiques d'étanchéité sans fin et dans lequel une garniture (6) élastique d'étanchéité longitudinale est montée dans la région de fermeture longitudinale, les anneaux (7) d'étanchéité sans fin étant insérés dans des gorges (9) périphériques des pièces frontales d'étanchéité (10) et la garniture (6) d'étanchéité longitudinale étant insérée dans une gorge (3) longitudinale et en ce qu'au points d'intersection des anneaux et de la garniture d'étanchéité sont ménagées dans la paroi (8) intérieure du bord (2) longitudinal de la gorge (3) des évidements (12) par lesquels la garniture (6) d'étanchéité dépasse par une partie saillante dirigée vers l'anneau (7) d'étanchéité,
caractérisé,
en ce qu'au moins les éléments d'étanchéité constitués sous forme de la garniture (6) longitudinale sont en caoutchouc de silicone mousse, comme par exemple un haut polymère de polysiloxane réticulé, auquel sont éventuellement incorporées des charges minérales et qui a, d'une manière prépondérante, une structure poreuse à cellules fermées, en ce que la matière plastique pour les éléments (6, 7) d'étanchéité et, de préférence, pour la garniture (6) d'étanchéité a une dureté Shore de 15 à 40, et en ce que la garniture (6) d'étanchéité longitudinale comporte aux points d'intersection de la garniture (6) et des anneaux (7) un prolongement (11, 11a, 11b) dont la forme correspond à l'évidement (12), mais qui dépasse vers l'intérieur.

2. Manchon de câble suivant la revendication 1,
caractérisé,
en ce que le prolongement (11) est monté fixe.

3. Manchon de câble suivant la revendication 1,
caractérisé,
en ce que le prolongement est formé par une pièce de prolongement (11a, 11b) distincte.

4. Manchon de câble suivant la revendication 1,
caractérisé,
en ce que le fond de la gorge (3) longitudinale présente, aux points d'intersection de la garniture (6) et des anneaux (7), une courbure (14) dirigée vers l'extérieur qui est si grande que la garniture (6) longitudinale qui y est introduite dépasse par l'évidement (12).

5. Manchon de câble suivant l'une des revendications précédentes,
caractérisé,
en ce qu'au moins un élément (6, 7) d'étanchéité présente un profil à arête de préférence trapézoïdale.

6. Manchon de câble suivant l'une des revendications 1 à 4,
caractérisé,
en ce qu'au moins un élément (6, 7) d'étanchéité présente un profil arrondi.

7. Manchon de câble suivant l'une des revendications précédentes,
caractérisé,
en ce que la garniture (6) longitudinale ne remplit la gorge (3) longitudinale qu'à une profondeur telle que les parois (8) de la gorge sont en saillie et qu'ainsi il est formé des bords de guidage pour le ressort (5) d'étanchéité, le long de la ligne de séparation du manchon de câble.

8. Manchon de câble suivant l'une des revendications précédentes,
caractérisé,
en ce que le ressort (5) d'étanchéité pénétrant dans la gorge (3) longitudinale emplie de la garniture (6) longitudinale comporte une partie élargie (13) aux points d'intersection de la garniture (6) et des anneaux (7) d'étanchéité, cette partie élargie correspondant à la section de l'évidement (12) du premier bord (2) longitudinal.

9. Manchon de câble suivant l'une des revendications précédentes,
caractérisé,
en ce que la largeur de la gorge (9) annulaire des pièces (10) d'étanchéité est légèrement plus grande que l'étendue correspondante de l'anneau (7) d'étanchéité.

10. Manchon de câble suivant l'une des revendications précédentes,
caractérisé,
en ce les faces de la garniture (6) d'étanchéité et/ou de l'anneau (7) d'étanchéité sont mouillées au moins aux points d'intersection à l'aide d'un agent d'étanchéité plastique qui ne durcit pas, de préférence à l'aide d'une patte à base de caoutchouc synthétique.

11. Manchon de câble suivant l'une des revendications précédentes,
caractérisé,
en ce les faces des éléments d'étanchéité, de préférence la garniture (6) longitudinale, sont découpés dans du matériau plein et présentent donc, en raison des pores que la découpe fait apparaître, une structure superficielle caractéristique.

12. Manchon de câble suivant l'une des revendications 1 à 10,
caractérisé,
en ce que les faces des éléments (6, 7) d'étanchéité sont lisses.

13. Manchon de câble suivant l'une des revendications précédentes,
caractérisé,
en ce que les éléments d'étanchéité de l'anneau (7) d'étanchéité sont plus durs que les éléments d'étanchéité de la garniture (6) d'étanchéité longitudinale.

14. Manchon de câble suivant l'une des revendications précédentes,
caractérisé,
en ce que les anneaux (7) d'étanchéité sont sous forme de conduit souple.

15. Manchon de câble suivant l'une des revendications précédentes,
caractérisé,
en ce que les anneaux (7) d'étanchéité sont en une matière plastique qui n'est pas de la mousse.

16. Manchon de câble suivant la revendication 1,
caractérisé,
en ce que les arêtes (17) d'étanchéité tournées vers l'anneau (7) d'étanchéité comportent, le long de l'évidement (12) de la paroi (8) de la gorge et le long d'une partie élargie (13) opposée du ressort (5) d'étanchéité, des profilés (20, 20a).

17. Manchon de câble suivant la revendication 16,
caractérisé,
en ce que les arêtes du profilé (20, 20a) sont vives.

18. Manchon de câble suivant la revendication 6,
caractérisé,
en ce que les arêtes (17) du profilé (20, 20a) sont biseautées en étant de préférence arrondies.

19. Manchon de câble suivant l'une des revendications 16 à 18,
caractérisé,
en ce que le profilé de l'arête (17) d'étanchéité est formé d'entailles (20) triangulaires.

20. Manchon de câble suivant l'une des revendications 16 à 18,
caractérisé,
en ce que le profilage de l'arête (17) d'étanchéité est formé d'entailles (20a) arrondies.

21. Manchon de câble suivant l'une des revendications 16 à 18,
caractérisé,
en ce que l'anneau (7) d'étanchéité a une section transversale circulaire.

22. Manchon de câble suivant l'une des revendications 16 à 18,
caractérisé,
en ce que l'anneau (7a) d'étanchéité a une section transversale comportant un côté.
